# EUROPÄISCHE PATENTSCHRIFT

(11) **EP 3 098 067 B1**
(45) Veröffentlichungstag und Bekanntmachung des Hinweises auf die Patenterteilung: **21.03.2018**
(21) Anmeldenummer: 16153743.6
(22) Anmeldetag: 02.02.2016
(51) Int. Cl.: B29D 30/66, B23Q 7/10, B65G 47/14

(54) **VORRICHTUNG UND VERFAHREN ZUM BESPIKEN VON LAUFSTREIFEN VON FAHRZEUGLUFTREIFEN**
DEVICE AND METHOD FOR APPLYING ANTISKID STUDS TO A VEHICLE TYRE TREAD
DISPOSITIF ET PROCEDE DE CLOUTAGE DE SURFACE DE ROULEMENT DE PNEUMATIQUES DE VEHICULE

(30) Priorität: 28.05.2015 DE 102015209834
(43) Veröffentlichungstag der Anmeldung: 30.11.2016
(73) Patentinhaber: Continental Reifen Deutschland GmbH, 30165 Hannover (DE)
(72) Erfinder: Koch, Tim, 30171 Hannover (DE); Berger, Markus, 31319 Sehnde (DE)
(74) Vertreter: Widjaja, Wira

(56) Entgegenhaltungen:
- EP-A2- 1 584 453
- DE-A1-102006 052 116
- DE-A1-102009 044 845
- US-A- 3 488 825
- US-A- 3 494 014
- US-A- 3 789 490
- US-A- 3 944 062

## Beschreibung

Die Erfindung betrifft eine Vorrichtung zum Bespiken von Laufstreifen von Fahrzeugluftreifen mit einer Spike-Fördereinrichtung zur Bereitstellung und Ausrichtung der Spikes und einer Spike-Setzpistole. Die Erfindung betrifft ferner ein Verfahren zum Bespiken von Laufstreifen von Fahrzeugluftreifen mittels einer Spike-Setzpistole, wobei die Spikes von einer Spike-Fördereinrichtung ausgerichtet bereitgestellt werden.
Um Spike-Setzpistolen von Bespikeungsanlagen mit vereinzelten und in ihrer Lage ausgerichteten Spikes zu versorgen, werden üblicherweise Vibrationswendelförderer verwendet, die über eine Förderbahn, meistens einen Förderschlauch oder ein Förderrohr, an die Spike-Setzpistolen angeschlossen sind und diese mit Spikes versorgen (siehe z.B. EP 1 584 453 A2). Bauartbedingt ist dabei der Durchsatz, also die Anzahl der lagegerichteten Spikes, die pro Zeitintervall der Spike-Setzpistole zur Verfügung gestellt werden können, auf ein bestimmtes Maß begrenzt. Es sind nun Spike-Setzpistolen verfügbar, die Spikes mit einem hohen Durchsatz verarbeiten können, wobei die bekannten einbahnigen Vibrationswendelförderer keine entsprechend hohe Anzahl an Spikes bereitstellen können. Der Vibrationswendelförderer ist daher in bekannten Bespikeungsanlagen der hinsichtlich der Zykluszeit kritische Bestandteil. Es ist bislang kein einbahniger Vibrationswendelförderer verfügbar, der für die erwähnten Spike-Setzpistolen Spikes mit einem Durchsatz bereitstellen kann, der mindestens dem Spike-Durchsatz der Spike-Setzpistole entspricht.
Der Erfindung liegt daher die Aufgabe zu Grunde, eine Vorrichtung und ein Verfahren der eingangs genannten Art zur Verfügung zu stellen, mit welchen der maximale Spikedurchsatz der Spike-Setzpistole voll ausgenützt werden kann. Es soll daher möglich sein, lagegerichtete Spikes in einer Anzahl bereitzustellen, die mindestens dem möglichen Durchsatz der Spike-Setzpistole entspricht.

Was die Vorrichtung betrifft, wird die gestellte Aufgabe erfindungsgemäß dadurch gelöst, dass die Spike-Fördereinrichtung zwei Förderbahnen aufweist, welche jeweils mit einer Pufferstrecke verbunden sind, deren Ausgänge abwechselnd mit einem mit der Spike-Setzpistole verbundenen Förderelement, insbesondere einem Förderschlauch oder einem Förderrohr, verbindbar sind, wobei unterbrechende und freigebende Stoppeinrichtungen am Auslauf der Spike-Fördereinrichtung in die Förderbahnen und an den Endabschnitten der Pufferstrecken vorgesehen sind.

Was das Verfahren betrifft, wird die gestellte Aufgabe erfindungsgemäß dadurch gelöst, dass von der Spike-Fördereinrichtung zwei Pufferstrecken mit Spikes beschickt und in diesen die Spikes in einer definierten Fülllänge aufgestaut werden, wobei die Pufferstrecken die aufgestauten Spikes abwechselnd an ein an der Spike-Setzpistole angeschlossenes Förderelement abgeben, in welchen die Spikes zur Spike-Setzpistole weitergeleitet werden.

Mit der erfindungsgemäßen Vorrichtung und dem erfindungsgemäßen Verfahren lässt sich die Anzahl der zur Spike-Setzpistole transportierten Spikes annähernd verdoppeln, da die Spike-Fördereinrichtung zwei Förderbahnen mit ausgerichteten Spikes beschickt. Die beiden Förderbahnen befüllen zuerst jeweils eine Pufferstrecke in einer der Spike-Fördereinrichtung nachgeordneten Baugruppe. Die Spikes werden dabei am Ende der Pufferstrecken durch jeweils eine dort vorgesehene Stoppeinrichtung gestoppt. Ist die jeweilige Pufferstrecke befüllt, wird die weitere Spikezufuhr zur Pufferstrecke durch die betreffende Stoppeinrichtung am Auslauf der Spike-Fördereinrichtung kurzzeitig gestoppt, um ein Verklemmen der Spikes durch den Staudruck zu verhindern. Die Spikes werden abwechselnd aus den befüllten Pufferstrecken mittels Blasluft zur Spike-Setzpistole transportiert. Nach dem Entleeren von Spikes einer Pufferstrecke wird die Spikezufuhr zu dieser Pufferstrecke durch die betreffende Stoppeinrichtung am Auslauf der Spike-Fördereinrichtung wieder ermöglicht. Die beschriebenen Verfahrensschritte laufen fortwährend nacheinander ab und ermöglichen so einen kontinuierlichen Bespikeungsvorgang bei erhöhtem Spikedurchsatz.

Bei einer bevorzugten Ausführungsform der Erfindung sorgt auf zweckmäßige Weise zumindest ein Weichenschieber für die abwechselnde Verbindung der Pufferstrecken mit dem mit der Spike-Setzpistole verbundenen Förderelement. Dabei kann entweder das Förderelement relativ zu den feststehenden Enden der Pufferstrecken bewegt werden oder es können die mit einem Weichenschieber verbundenen Enden der Pufferstrecken relativ zum feststehenden Ende des Förderelementes entsprechend bewegt werden.

Vorteilhafterweise ist bei einer weiteren bevorzugten Ausführungsform der Erfindung in einem Abstand vor der Spike-Setzpistole am Förderelement ein Sensor vorgesehen, welcher beim Unterschreiten einer Mindestanzahl an Spikes vor der Spike-Setzpistole ein Signal zum Wechseln der Pufferstrecken liefert.

Um der Spike-Setzpistole ausreichend Spikes zur Verfügung zu stellen, ist es vorteilhaft, wenn die Pufferstrecken eine definierte Fülllänge aufweisen.

Bei einer weiteren vorteilhaften Ausführungsform der Erfindung ist an jeder Pufferstrecke ein weiterer Sensor vorgesehen, welcher das erfolgte Auffüllen der Pufferstrecke mit Spikes detektiert und welcher jeweils ein Signal zum Betätigen der ersten, die Spikezuführung am Auslauf der Spike-Fördereinrichtung in die jeweilige Förderbahn unterbrechende und freigebende Stoppeinrichtung liefert.

Besonders geeignet sind als Sensoren induktive oder kapazitive Sensoren oder Lichtschranken.

Beim erfindungsgemäßen Verfahren wird die Spikezuführung in die Förderbahnen unterbrochen, sobald die Pufferstrecken bis zur definierten Füllhöhe mit Spikes befüllt sind. Dabei wird jene Pufferstrecke, welche mit dem Förderelement gerade nicht verbunden ist, an ihrem Ende für einen Spikeweitertransport gesperrt, sodass diese Pufferstrecke in der Zwischenzeit erneut mit Spikes befüllt werden kann.

Darüber hinaus ist beim erfindungsgemäßen Verfahren vorteilhafterweise vorgesehen, dass beim Unterschreiten einer Mindestanzahl an Spikes in einem Förderelementabschnitt vor der Spike-Setzpistole an den Weichenschieber ein Signal zum Wechseln der Zuführbahn gegeben wird.

Weitere Merkmale, Vorteile und Einzelheiten der Erfindung werden nun anhand der Zeichnung, die schematisch ein Ausführungsbeispiel der Erfindung darstellt, näher beschrieben. Dabei zeigen

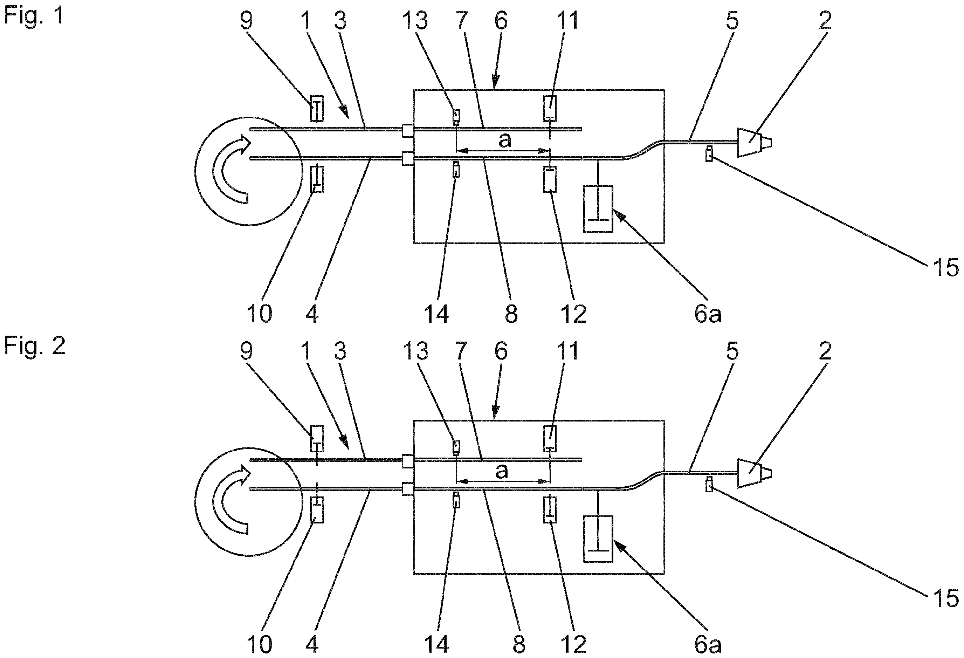

Fig. 1 bis Fig. 4 schematische Ansichten einer Vorrichtung zum Bespiken von Laufstreifen von Fahrzeugluftreifen in unterschiedlichen Betriebszuständen.

In Fig. 1 sind eine Spike-Fördereinrichtung 1, welche insbesondere ein Vibrationswendelförderer ist, zwei Förderbahnen 3, 4, eine Weiche 6 und eine Spike-Setzpistole 2 dargestellt, welche an ein Förderelement 5 angeschlossen ist.

Die Förderbahnen 3, 4 sind in der Weiche 6 mit Pufferstrecken 7, 8 versehen oder verbunden, welche ebenfalls Förderbahnen, wie beispielsweise Rohre oder Schläuche sind.

In der Spike-Fördereinrichtung 1 befindet sich eine Vielzahl an Spikes, welche beispielsweise von einem nicht gezeigten Vorratsbehälter kontinuierlich nachgeliefert werden. Die Spike-Fördereinrichtung 1 beschickt die Förderbahnen 3, 4 gleichzeitig mit ausgerichteten Spikes.

Die Weiche 6 weist einen Weichenschieber 6a auf, welcher von einem Aktuator, beispielsweise einem Pneumatikzylinder, betätigt wird und welcher, wie noch beschrieben wird, das Förderelement 5 abwechselnd mit dem Ende der Pufferstrecke 7 oder dem Ende der Pufferstrecke 8 verbindet.

Am Auslauf der Spike-Fördereinrichtung 1 in die Förderbahnen 3, 4 ist an jeder Förderbahn 3, 4 eine Stoppeinrichtung 9, 10 angeordnet, zwei weitere Stoppeinrichtungen 11, 12 befinden sich an den Enden der Pufferstrecken 7, 8 in der Weiche 6.

Jede Stoppeinrichtung 9, 10, 11, 12 weist ein Stoppelement, beispielsweise einen pneumatisch oder elektrisch betriebenen metallischen Stift, Bolzen oder dergleichen auf, welches in die jeweilige Förderbahn 3, 4 bzw. Pufferstrecke 7, 8 hinein und aus dieser heraus bewegbar ist, um den Transport von Spikes zu stoppen oder zuzulassen.

Darüber hinaus befindet sich an jeder Pufferstrecke 7, 8 in einem Abstand a vor den Stoppeinrichtungen 9, 10 ein Sensor 13, 14, wobei der Abstand a der Fülllänge der Pufferstrecken 7, 8 entspricht. Ein weiterer Sensor 15 ist am Förderelement 5 in einem Abstand vor der Spike-Setzpistole 2 positioniert. Die Sensoren 13, 14, 15 sind beispielsweise induktive oder kapazitive Sensoren oder Lichtschranken, die das Vorhandensein von Spikes in den Förderbahnen 3, 4 und den Pufferstrecken 7, 8, wie noch beschrieben wird, detektieren und Signale zur Betätigung der Stoppeinrichtungen 9, 10, 11, 12 und des Weichenschiebers 6a liefern. An den Pufferstrecken 7, 8 ist ferner jeweils zwischen der Stoppeinrichtung 9 bzw. 10 und den Sensoren 13 bzw. 14 ein nicht dargestellter Druckluftanschluss vorgesehen, über welchen durch Einblasen von Druckluft in an sich bekannter Weise Spikes zur Spike-Setzpistole 2 transportiert werden.

Im nachfolgenden wird unter Bezugnahme auf die Figuren 1 bis 4 die Funktionsweise der Vorrichtung erläutert.

Zu Beginn eines Bespikeungsvorganges (Fig. 1) sind die Stoppelemente der Stoppeinrichtungen 11, 12 ausgefahren, die Stoppelemente der Stoppeinrichtungen 9, 10 sind eingefahren, sie befinden sich daher außerhalb der Förderbahnen 3, 4. Die beiden Förderbahnen 3, 4 werden mit Spikes beschickt, wobei sich die Spikes in den Pufferstrecken 7, 8 vor den Stoppeinrichtungen 11, 12 hintereinander über die Fülllänge a aufstauen.

Sind die Pufferstrecken 7, 8 über die Fülllänge a befüllt, wird dies von den Sensoren 13, 14 detektiert und es wird die Zuführung von Spikes in die beiden Förderbahnen 3, 4 durch Ausfahren der Stoppelemente der Stoppeinrichtungen 9, 10 unterbrochen (Fig. 2). Die aktuell am Förderelement 5 angeschlossene Pufferstrecke 8 wird durch Einfahren des Stoppelementes der Stoppeinrichtung 12 für den Spiketransport zur Spike-Setzpistole 2 freigegeben.

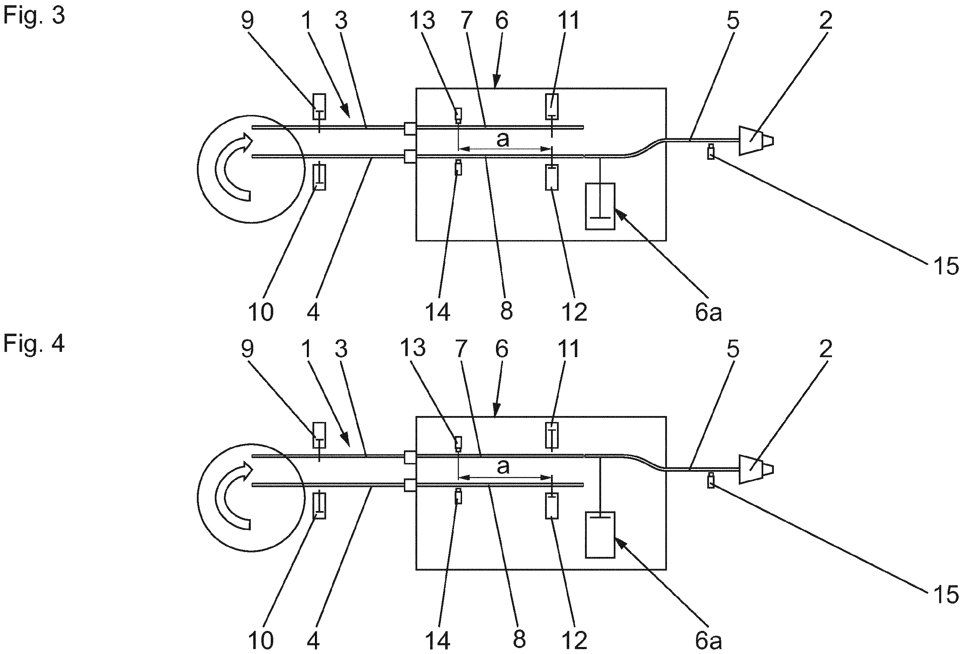

Die in der Pufferstrecke 8 befindlichen Spikes werden, unterstützt durch Druckluft, im Förderelement 5 zur Spike-Setzpistole 2 transportiert. Die Stoppeinrichtung 12 schließt die Pufferstrecke 8 und die Stoppeinrichtung 10 gibt die Förderbahn 4 für eine Spikezuführung wieder frei, sodass sich Spikes erneut entlang der Pufferstrecke 8 stauen können (Fig. 3).

Wurden zwischenzeitlich von der Spike-Setzpistole 2 so viele Spikes in den Laufstreifen eingesetzt, dass der vor der Spike-Setzpistole 2 positionierte Sensor 15 keine Spikes mehr detektiert, wird ein Signal zum Wechseln der Pufferstrecke gegeben, der Weichenschieber 6a löst das Förderelement 5 von der Pufferstrecke 8, schiebt das Förderelement 5 zur Pufferstrecke 7 und stellt die Verbindung zwischen diesen Bauteilen her. Die Stoppeinrichtung 11 gibt die Pufferstrecke 7 zum Transport der entlang der Fülllänge a aufgestauten Spikes zur Spike-Setzpistole 2 frei (Fig. 4). Der Transport erfolgt durch Einblasen von Druckluft. Inzwischen wird die Pufferstrecke 8 mit Spikes befüllt.

Durch das abwechselnde Verbinden des Förderelementes 5 mit einer der Pufferstrecken 7, 8 in der Weiche 6 und entsprechendes Betätigen der Stoppeinrichtungen 9, 10, 11, 12 kann somit eine kontinuierliche Bespikeung mit hohem Spikedurchsatz sichergestellt werden.

Bei einer weiteren, nicht gezeigten Ausführungsform der Erfindung sind die beiden Pufferstrecken 7, 8 an den Weichenschieber 6a angeschlossen, das Förderelement 5 ist ortsfest, sodass zum abwechselnden Anschließen der Pufferstrecken 7, 8 an die Spike-Setzpistole 2 nicht das Förderelement 5 sondern die Pufferstrecken 7, 8 bewegt werden.

Die entsprechende Regelung und Steuerung der beteiligten Bauteile bzw. Komponenten der Vorrichtung erfolgt mittels der vorhandenen Anlagensteuerung. Die dazu erforderliche Hard- und Software sind nicht Gegenstand der Erfindung.

### Bezugsziffernliste

1 ....................... Spike-Fördereinrichtung
2 ....................... Spike-Setzpistole
3, 4 ................... Förderbahn
5 ....................... Förderelement
6 ....................... Weiche
6a ..................... Weichenschieber
7, 8 ................... Pufferstrecke
9, 10, 11, 12 ..... Stoppeinrichtung
13, 14, 15 ......... Sensor
a ....................... Fülllänge

## Patentansprüche

1. Vorrichtung zum Bespiken von Laufstreifen von Fahrzeugluftreifen mit einer Spike-Fördereinrichtung (1) zur Bereitstellung und Ausrichtung der Spikes und einer Spike-Setzpistole (2),
**dadurch gekennzeichnet,**
**dass** die Spike-Fördereinrichtung (1) zwei Förderbahnen (3, 4) aufweist, welche jeweils mit einer Pufferstrecke (7, 8) verbunden sind, deren Ausgänge abwechselnd mit einem mit der Spike-Setzpistole (2) verbundenen Förderelement (5), insbesondere einem Förderschlauch oder einem Förderrohr, verbindbar sind, wobei unterbrechende und freigebende Stoppeinrichtungen (9, 10; 11, 12) am Auslauf der Spike-Fördereinrichtung (1) in die Förderbahnen (3, 4) und an den Endabschnitten der Pufferstrecken (7, 8) vorgesehen sind.

2. Vorrichtung nach Anspruch 1, **dadurch gekennzeichnet, dass** ein Weichenschieber (6a) zur abwechselnden Verbindung der Pufferstrecken (7, 8) mit dem mit der Spike-Setzpistole (2) verbundenen Förderelement (5) vorgesehen ist.

3. Vorrichtung nach Anspruch 1 oder 2, **dadurch gekennzeichnet, dass** in einem Abstand vor der Spike-Setzpistole (2) am Förderelement (5) ein Sensor (15) vorgesehen ist, welcher beim Unterschreiten einer Mindestanzahl an Spikes vor der Spike-Setzpistole (2) ein Signal zum Wechseln der Pufferstrecken (7, 8) liefert.

4. Vorrichtung nach einem der Ansprüche 1 bis 3, **dadurch gekennzeichnet, dass** die Pufferstrecken (7, 8) definierte Fülllängen (a) aufweisen.

5. Vorrichtung nach einem der Ansprüche 1 bis 4, **dadurch gekennzeichnet, dass** an jeder Pufferstrecke (7, 8) ein weiterer Sensor (13, 14) vorgesehen ist, welcher das erfolgte Auffüllen der Pufferstrecke (7, 8) mit Spikes detektiert und welcher jeweils ein Signal zum Betätigen der ersten, die Spikezuführung am Auslauf der Spike-Fördereinrichtung (1) in die jeweilige Förderbahn (3, 4) unterbrechende und freigebende Stoppeinrichtung (9, 10) liefert.

6. Vorrichtung nach Anspruch 3 oder 5, **dadurch gekennzeichnet, dass** die Sensoren (13, 14, 15) induktive oder kapazitive Sensoren oder Lichtschranken sind.

7. Verfahren zum Bespiken von Laufstreifen von Fahrzeugluftreifen mittels einer Spike-Setzpistole (2), wobei die Spikes von einer Spike-Fördereinrichtung (1) ausgerichtet bereitgestellt werden,
**dadurch gekennzeichnet,**
**dass** von der Spike-Fördereinrichtung (1) zwei Pufferstrecken (7, 8) mit Spikes beschickt und in diesen die Spikes in einer definierten Fülllänge (a) aufgestaut werden, wobei die Pufferstrecken (7, 8) die aufgestauten Spikes abwechselnd an ein an der Spike-Setzpistole (2) angeschlossenes Förderelement (5) abgeben, in welchen die Spikes zur Spike-Setzpistole (2) weitergeleitet werden.

8. Verfahren nach Anspruch 7, **dadurch gekennzeichnet, dass** von der Spike-Fördereinrichtung (1) zwei mit den Pufferstrecken (7, 8) verbundene Förderbahnen (3, 4) mit Spikes beschickt werden.

9. Verfahren nach Anspruch 7 oder 8, **dadurch gekennzeichnet, dass** die Spikezuführung in die Förderbahnen (3, 4) unterbrochen wird, sobald die Pufferstrecken (7, 8) bis zur definierten Fülllänge (a) mit Spikes befüllt sind.

10. Verfahren nach einem der Ansprüche 7 bis 9, **dadurch gekennzeichnet, dass** jene Pufferstrecke (7, 8), welche mit dem Förderelement (5) gerade nicht verbunden ist, an ihrem Ende für einen Spikeweitertransport gesperrt wird.

11. Verfahren nach einem der Ansprüche 7 bis 10, **dadurch gekennzeichnet, dass** beim Unterschreiten einer Mindestanzahl an Spikes in einem Förderelementabschnitt vor der Spike-Setzpistole (2) an einen Weichenschieber (6a) ein Signal zum Wechseln der Pufferstrecke (7, 8) gegeben wird.

## Claims

1. Device for applying antiskid studs to treads of pneumatic vehicle tyres, comprising a stud transporting device (1) for providing and aligning the studs and a stud setting gun (2),
**characterized**
**in that** the stud transporting device (1) has two transporting paths (3, 4), which are respectively connected to a buffer section (7, 8), the outlets of which can be alternately connected to a transporting element (5) connected to the stud setting gun (2), in particular a transporting tube or a transporting pipe, wherein interrupting and releasing stop devices (9, 10; 11, 12) are provided at the outlet of the stud transporting device (1) into the transporting paths (3, 4) and at the end portions of the buffer sections (7, 8).

2. Device according to Claim 1, **characterized in that** a diverter slide (6a) is provided for alternately connecting the buffer sections (7, 8) to the transporting element (5) connected to the stud setting gun (2).

3. Device according to Claim 1 or 2, **characterized in that** a sensor (15) is provided on the transporting element (5) at a distance upstream of the stud setting gun (2) and supplies a signal for changing the buffer sections (7, 8) when the number of studs upstream of the stud setting gun (2) is below a minimum number.

4. Device according to one of Claims 1 to 3,
**characterized in that** the buffer sections (7, 8) have defined filling lengths (a).

5. Device according to one of Claims 1 to 4,
**characterized in that** a further sensor (13, 14) is provided on each buffer section (7, 8), detects when the buffer section (7, 8) has been filled with studs and in each case supplies a signal for actuating the first stopping device (9, 10) interrupting and releasing the feed of studs at the outlet of the stud transporting device (1) into the respective transporting path (3, 4).

6. Device according to Claim 3 or 5, **characterized in that** the sensors (13, 14, 15) are inductive or capacitive sensors or light barriers.

7. Method for applying antiskid studs to treads of pneumatic vehicle tyres by means of a stud setting gun (2), wherein the studs are provided in an aligned manner by a stud transporting device (1),
**characterized**
**in that** two buffer sections (7, 8) are charged with studs by the stud transporting device (1) and the studs are accumulated in these buffer sections over a defined filling length (a), wherein the buffer sections (7, 8) deliver the accumulated studs alternately to a transporting element (5) connected to the stud setting gun (2), in which the studs are passed on to the stud setting gun (2).

8. Method according to Claim 7, **characterized in that** two transporting paths (3, 4) connected to the buffer sections (7, 8) are charged with studs by the stud transporting device (1).

9. Method according to Claim 7 or 8, **characterized in that** the stud feed into the transporting paths (3, 4) is interrupted as soon as the buffer sections (7, 8) are filled with studs up to the defined filling length (a).

10. Method according to one of Claims 7 to 9,
**characterized in that** the buffer section (7, 8) that is not connected to the transporting element (5) at a particular time is blocked at its end for further stud transport.

11. Method according to one of Claims 7 to 10,
**characterized in that**, when the number of studs in a transporting element section upstream of the stud setting gun (2) is below a minimum number, a signal for changing the buffer section (7, 8) is issued to a diverter slide (6a).

## Revendications

1. Dispositif de cloutage de bandes de roulement de pneumatiques de véhicule avec un dispositif de transport de clous (1) pour la fourniture et l'orientation des clous et avec un pistolet de pose de clous (2), **caractérisé en ce que** le dispositif de transport de clous (1) présente deux bandes transporteuses (3, 4), qui sont respectivement raccordées à une zone tampon (7, 8), dont les sorties peuvent être raccordées en alternance à un élément de transport (5) raccordé au pistolet de pose de clous (2), en particulier un tuyau flexible de transport ou un tube de transport, dans lequel il est prévu des dispositifs d'arrêt à fonction d'interruption et de libération (9, 10; 11, 12) à la sortie du dispositif de transport de clous (1) dans les bandes transporteuses (3, 4) et aux parties d'extrémité des zones tampons (7, 8).

2. Dispositif selon la revendication 1, **caractérisé en ce qu'**il est prévu une tringle d'aiguillage (6a) pour le raccordement alterné des zones tampons (7, 8) avec l'élément de transport (5) raccordé au pistolet de pose de clous (2).

3. Dispositif selon la revendication 1 ou 2, **caractérisé en ce qu'**il est prévu sur l'élément de transport (5), à une distance du pistolet de pose de clous (2), un détecteur (15) qui, en cas de chute en dessous d'un nombre minimal de clous avant le pistolet de pose de clous (2), produit un signal pour changer les zones tampons (7, 8).

4. Dispositif selon l'une quelconque des revendications 1 à 3, **caractérisé en ce que** les zones tampons (7, 8) présentent des longueurs de remplissage (a) définies.

5. Dispositif selon l'une quelconque des revendications 1 à 4, **caractérisé en ce qu'**il est prévu sur chaque zone tampon (7, 8) un autre détecteur (13, 14), qui détecte le remplissage réussi de la zone tampon (7, 8) avec des clous et qui produit respectivement un signal pour actionner le premier dispositif d'arrêt (9, 10) interrompant et libérant la fourniture de clous à la sortie du dispositif de transport de clous (1) dans la bande transporteuse respective (3, 4).

6. Dispositif selon la revendication 3 ou 5, **caractérisé en ce que** les détecteurs (13, 14, 15) sont des détecteurs inductifs ou capacitifs ou des barrières lumineuses.

7. Procédé de cloutage de bandes de roulement de pneumatiques de véhicule au moyen d'un pistolet de pose de clous (2), dans lequel on prépare les clous orientés par un dispositif de transport de clous (1), **caractérisé en ce que** l'on garnit de clous deux zones tampons (7, 8) par le dispositif de transport de clous (1) et on accumule dans celles-ci les clous dans une longueur de remplissage définie (a), dans lequel les zones tampons (7, 8) délivrent les clous accumulés en alternance à un élément de transport (5) raccordé au pistolet de pose de clous (2), dans lequel les clous sont acheminés jusqu'au pistolet de pose de clous (2).

8. Procédé selon la revendication 7, caractérisé en ce l'on garnit de clous par le dispositif de transport de clous (1) deux bandes transporteuses (3, 4) raccordées aux zones tampons (7, 8).

9. Procédé selon la revendication 7 ou 8, **caractérisé en ce que** l'on interrompt la fourniture de clous dans les bandes transporteuses (3, 4), dès que les zones tampons (7, 8) sont remplies de clous jusqu'à la longueur de remplissage définie (a).

10. Procédé selon l'une quelconque des revendications 7 à 9, **caractérisé en ce que** l'on bloque chaque zone tampon (7, 8), qui n'est pas raccordée directement à l'élément de transport (5), à son extrémité en vue d'un acheminement de clous.

11. Procédé selon l'une quelconque des revendications 7 à 10, **caractérisé en ce que**, lors d'une chute en dessous d'un nombre minimal de clous dans une partie d'élément de transport avant le pistolet de pose de clous (2), on envoie à la tringle d'aiguillage (6a) un signal pour changer la zone tampon (7, 8).
